(19)

**Europäisches Patentamt**
**European Patent Office**
**Office européen des brevets**

(11) **EP 4 760 816 A1**

(12) **EUROPEAN PATENT APPLICATION**
published in accordance with Art. 153(4) EPC

(43) Date of publication:
**17.06.2026 Bulletin 2026/25**

(21) Application number: **25772264.5**

(22) Date of filing: **16.01.2025**

(51) International Patent Classification (IPC):
$H01M\ 4/525$ (2010.01)    $H01M\ 4/505$ (2010.01)
$H01M\ 10/052$ (2010.01)    $C01G\ 53/50$ (2025.01)
$H01M\ 4/131$ (2010.01)    $H01M\ 4/1391$ (2010.01)
$C01G\ 53/42$ (2025.01)    $H01M\ 4/02$ (2006.01)

(52) Cooperative Patent Classification (CPC):
**H01M 10/052; C01G 53/42; C01G 53/50;**
**C01G 53/506; H01M 4/525; H01M 10/0525;**
**H01M 10/058;** C01P 2002/60; C01P 2002/70;
C01P 2006/32; C01P 2006/40; H01M 2004/028;
Y02E 60/10

(86) International application number:
**PCT/KR2025/099038**

(87) International publication number:
**WO 2025/193018 (18.09.2025 Gazette 2025/38)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **15.03.2024   KR 20240036442**
**17.07.2024   KR 20240094617**
**05.12.2024   KR 20240179806**

(71) Applicant: **LG Energy Solution, Ltd.**
**Seoul 07335 (KR)**

(72) Inventors:
• **LEE, Sanghyun**
  **Daejeon 34122 (KR)**
• **KANG, Joonhyeon**
  **Daejeon 34122 (KR)**
• **MYEONG, Seungjun**
  **Daejeon 34122 (KR)**
• **PARK, Sin Young**
  **Daejeon 34122 (KR)**
• **PARK, Cheol Hee**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL AND LITHIUM SECONDARY BATTERY COMPRISING SAME**

(57)    The present invention relates to a positive active material and a lithium secondary battery comprising same, the positive electrode active material being a high-nickel lithium transition metal composite oxide having a layered structure and having a lattice volume V satisfying [expression 1] and a Curie-Weiss temperature T satisfying [expression 2]. [Expression 1] $101.4\ \text{Å}^3 \le V \le 101.75\ \text{Å}^3$ [Expression 2] $0\ K \le T \le 30\ K$ The present invention can easily check, at the material level, whether the battery capacity of a manufactured battery accurately conforms to the required capacity, and can control same, and enables the minimization of the deviation between the target design capacity and the actual capacity of the manufactured battery.

**FIG. 1**

START
Step of mixing lithium precursor and transition metal precursor — S1
Step of firing at primary firing temperature — S2
Step of firing at secondary firing temperature — S3
END

## Description

### Technical Field

This application is based on and claims priorities from Korean Patent Application Nos. 2024-0036442, 2024-0094617 and 2024-0179806 filed on March 15, 2024, July 17, 2024, and December 5, 2024, respectively, with the Korean Intellectual Property Office, the disclosures of which are incorporated herein in their entirety by reference.
The present disclosure relates to a positive electrode active material, and a lithium secondary battery including the same.

### Background Art

In accordance with an increase in the development of technology and demand for various electronic devices, the demand for secondary batteries as an energy source is rapidly increasing. Among these secondary batteries, lithium secondary batteries having a high energy density and voltage, a long cycle lifetime, and a low self-discharge rate are commercialized and widely used.
These lithium secondary batteries are applied to various applications including electric vehicles. In this case, the necessity of adjusting specifications of the batteries, such as an upper limit charge voltage and charge/discharge capacity, is increasing depending on the type of an application to which the lithium secondary battery is applied or customer needs.

### Disclosure of Invention

### Technical Goals

The present disclosure provides a positive electrode active material, and a lithium secondary battery including the same. In a high-nickel lithium transition metal composite oxide-based positive electrode active material having a layered structure, a lattice volume and Curie-Weiss temperature are controlled within a predetermined range to adjust a nickel occupancy ($Ni_{Li}$) in a lithium layer, an H2-H3 structural phase transition, and/or a voltage plateau ($V_{H2-H3}$). Thus, it is possible to easily check whether the design capacity of a manufactured secondary battery coincides with a required actual capacity thereof at a material level and thereby control the capacity.

### Technical solutions

The present disclosure relates to a positive electrode active material with a high-nickel lithium transition metal composite oxide-based positive electrode active material having a layered structure, wherein a lattice volume V of the positive electrode active material satisfies following Equation 1, and Curie-Weiss temperature T satisfies following Equation 2:

$$[\text{Equation 1}]$$

$$101.4 \ \text{Å}^3 \leq V \leq 101.75 \ \text{Å}^3$$

$$[\text{Equation 2}]$$

$$0 \ \text{K} \leq T \leq 30 \ \text{K}$$

The lattice volume V of the positive electrode active material is a value measured by X-ray powder diffraction (XRD), and the Curie-Weiss temperature is a value measured by a superconducting quantum interference device (SQUID).
In an implementation example, the positive electrode active material may be characterized in that the lattice volume V satisfies the following Equation 3:

$$[\text{Equation 3}]$$

$$101.5 \ \text{Å}^3 \leq V \leq 101.70 \ \text{Å}^3$$

In an implementation example, the positive electrode active material may be characterized in that the Curie-Weiss temperature T satisfies the following Equation 4:

$$[\text{Equation 4}]$$

$$10\ \text{K} \leq \text{T} \leq 25\ \text{K}$$

In an implementation example, the positive electrode active material may be characterized by including a lithium layer and a transition metal layer, and at least a portion of a lithium site of the lithium layer may be occupied by nickel.

In an implementation example, the positive electrode active material may be characterized in that a nickel occupancy ($Ni_{Li}$) of the lithium layer is 0.003 to 0.015.

In an implementation example, the positive electrode active material may be characterized in that a nickel occupancy ($Ni_{Li}$) of the lithium layer is 0.005 to 0.012.

In an implementation example, the positive electrode active material may be characterized in that a crystalline size is 100 nm to 300 nm.

In an implementation example, the positive electrode active material of the present disclosure may be characterized by being represented by the following Formula 1:

$$[\text{Formula 1}] \qquad Li_aNi_{1-b-c-d}Co_bMn_cQ_dO_{2+\delta}$$

where Q is at least one element selected from zirconium (Zr), titanium (Ti), tungsten (W), aluminum (Al), and boron (B), and $0.96 \leq a \leq 1.04$, $0 \leq b \leq 0.3$, $0 \leq c \leq 0.3$, $0 \leq d \leq 0.1$, $0 \leq b+c+d \leq 0.3$, and $-0.1 \leq \delta \leq 0.1$.

In an implementation example, the positive electrode active material of the present disclosure may be characterized in that b+c+d is $0 \leq b+c+d \leq 0.2$ in the Formula 1.

Also, the present disclosure relates to a lithium secondary battery including a positive electrode including the positive electrode active material, a negative electrode, and an electrolyte.

In addition, the present disclosure relates to a method for manufacturing a high-nickel lithium transition metal composite oxide-based positive electrode active material having a layered structure, the method comprising: mixing a lithium precursor and a transition metal precursor such that a molar ratio of lithium to a transition metal (Li/M molar ratio) is 0.96 to 1.04; performing primary sintering on a mixture of the precursors at a temperature of 300°C to 500°C; and performing secondary sintering on the mixture of the precursors on which the primary sintering has been performed, at a temperature of 600°C to 900°C, wherein a lattice volume V of the positive electrode active material satisfies the Equation 1, and Curie-Weiss temperature T satisfies the Equation 2:

In addition, the present disclosure relates to a method for manufacturing a lithium secondary battery including a high-nickel lithium transition metal composite oxide-based positive electrode active material having a layered structure, the method comprising: adjusting a molar ratio of lithium to a transition metal (Li/M molar ratio) included in the positive electrode active material to adjust a voltage at which an H2-H3 structural phase transition occurs, and adjusting the voltage at which the H2-H3 structural phase transition occurs to adjust an upper limit charge capacity during charging.

In an implementation example, the adjusting of the molar ratio of lithium to the transition metal (Li/M molar ratio) included in the positive electrode active material may include: mixing a lithium precursor and a transition metal precursor such that the molar ratio of lithium to the transition metal (Li/M molar ratio) has a specific value; performing sintering on a mixture of the precursors at a primary sintering temperature; and performing sintering on the mixture of the precursors on which the primary sintering has been performed, at a secondary sintering temperature higher than the primary sintering temperature.

In an implementation example, a lattice volume V of the positive electrode active material may have a value of $101.4\ \text{Å}^3$ to $101.75\ \text{Å}^3$, Curie-Weiss temperature T of the positive electrode active material may have a value of 0 K to 30 K, and the lattice volume V may be a value measured by X-ray powder diffraction (XRD), and the Curie-Weiss temperature T may be a value measured by a superconducting quantum interference device (SQUID).

In an implementation example, the positive electrode active material may be characterized by including a lithium layer and a transition metal layer, and at least a portion of a lithium site of the lithium layer may be occupied by nickel.

In an implementation example, it may be characterized in that the nickel occupancy ($Ni_{Li}$) of the lithium layer is 0.003 to 0.015.

In an implementation example, it may be characterized in that the crystalline size of the positive electrode active material is 100 nm to 300 nm.

In an implementation example, the positive electrode active material may be characterized by being represented by the following Formula 1:

$$[\text{Formula 1}] \qquad Li_aNi_{1-b-c-d}Co_bMn_cQ_dO_{2+\delta}$$

where Q is at least one element selected from zirconium (Zr), titanium (Ti), tungsten (W), aluminum (Al), and boron (B), and $0.96 \leq a \leq 1.04$, $0 \leq b \leq 0.3$, $0 \leq c \leq 0.3$, $0 \leq d \leq 0.1$, $0 \leq b+c+d \leq 0.3$, and $-0.1 \leq \delta \leq 0.1$.

**Effects**

The positive electrode active material having the lattice volume and Curie-Weiss temperature as described in the present disclosure may be manufactured by controlling synthesis conditions (*e.g.*, a Li/M molar ratio, a sintering temperature, a sintering time) of the positive electrode active material. Through this control, the crystalline size and nickel occupancy in the lithium layer ($Ni_{Li}$), and the consequent H2-H3 phase transition behavior may be effectively controlled.

As a result, by confirming that the lattice volume and the Curie-Weiss temperature are within a predetermined range in the high-nickel positive electrode active material having a layered structure according to the present disclosure, a crystalline size and a nickel occupancy ($Ni_{Li}$) in the lithium layer, an H2-H3 phase transition and/or a voltage plateau ($V_{H2-H3}$) may be effectively controlled. Accordingly, it is possible to easily check whether the design capacity of a manufactured secondary battery coincides with a required actual capacity thereof at the material level and thereby control the capacity. Furthermore, it is also possible to minimize the difference between the intended design capacity and the actual capacity of the manufactured secondary battery.

**Brief Description of Drawings**

The following drawings attached hereto illustrate embodiments of the present disclosure and serve to help further understanding of the technical idea of the present disclosure together with the detailed description of the disclosure to be described later. Therefore, the present disclosure should not be construed as being limited to the matters illustrated in the drawings.

FIG. 1 is a flowchart illustrating a method for manufacturing a positive electrode active material according to an embodiment of the present disclosure.

FIG. 2 is a graph illustrating a lattice volume V according to the nickel occupancy ($Ni^{2+}$ at Li site, $Ni_{Li}$) of a lithium layer of the positive electrode active material.

FIG. 3 is a graph illustrating the Curie-Weiss temperature (Curie-Weiss Temp.) T according to the nickel occupancy ($Ni^{2+}$ at Li site, $Ni_{Li}$) of the lithium layer of the positive electrode active material.

FIG. 4 is a graph illustrating a crystalline size of the positive electrode active material.

FIG. 5 is a graph illustrating the microstrain of the positive electrode active material.

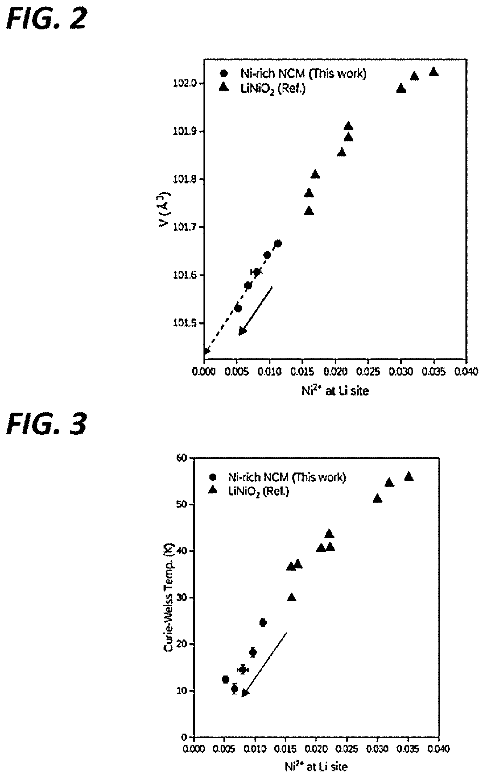

In the above FIGS. 2 and 3, Ref. data are derived from the following reference: Philipp Kurzhals, Felix Riewald, Matteo Bianchini, Heino Sommer, Hubert A. Gasteiger, and Jürgen Janek, The $LiNiO_2$ cathode active material: a comprehensive study of calcination conditions and their correlation with physicochemical properties. part I. structural chemistry. J. Electrochem. Soc. 168, 110518 (2021).

**Best Mode for Carrying Out the Invention**

Terms or words used in the disclosure and claims should not be construed as being limited to general and dictionary meanings, but should be interpreted as the meanings and concepts corresponding to the technical idea of the present disclosure based on the principle that the inventor is allowed to define terms appropriately in order to explain his/her invention in the best way possible.

Therefore, the configuration of embodiments described in the disclosure is only one of example embodiments of the present disclosure and does not represent all of the technical ideas of the present disclosure, so it should be understood that there may be various equivalents and modifications that could replace the technical ideas at the time of filing this application. Herein, singular forms are intended to include plural forms unless otherwise indicated contextually.

In the present disclosure, when it is said that a certain part "includes" a certain component, this means that the certain part may further include other components rather than excluding other components unless specifically stated to the contrary. Therefore, for example, a composition including compound A may include other compounds in addition to compound A. However, the term "including" or "comprising" also encompasses, as a specific embodiment thereof, the more restrictive meanings of "consisting essentially/necessarily of" and "consisting of," so that, for example, a "composition including compound A" may also consist (essentially/necessarily) of compound A.

In connection therewith, it should be understood that the term "comprise," "include," or "have" described herein are intended to specify the presence of implemented features, numbers, steps, components, or combinations thereof, but should be understood as not excluding in advance the possibility of the presence or addition of one or more other features, numbers, steps, components, or combinations thereof.

Herein, when an amount, concentration, or other value or parameter is given as either a range, preferred range, or a list of upper limit values and lower limit values, this is to be understood as specifically disclosing all ranges that may be formed from any pair of any upper range limit or preferred value and any lower range limit or preferred value, regardless of whether the ranges are separately disclosed. Where a range of numerical values is recited herein, unless otherwise stated, for example, unless there is a limiting term such as greater than, less than or the like, the range is intended to include the endpoints thereof, and all integers and fractions within the range. It is not intended that the scope of the disclosure is not limited to the specific values recited when describing a range. The scope of the present disclosure is not intended to be limited to the specific values mentioned when defining the range. In addition, as used herein, "about," "approximately," and "substantially" are used to mean a range of values or degrees or a close approximation thereto, in consideration of inherent manufacturing and material tolerances.

Among physical properties mentioned herein, when the measured temperature affects the relevant physical property, the physical property is a physical property measured at room temperature, unless otherwise specified. The term room temperature is a temperature in a state that is not warmed or cooled, which may refer to any temperature in a range of about 10°C to 30°C, or at about 23°C or about 25°C. In addition, unless specifically stated otherwise, the unit of temperature herein is °C.

In addition, among physical properties mentioned herein, when the measured pressure affects the relevant physical property, the property is measured at normal pressure, for example, atmospheric pressure (approximately 1 atm), unless otherwise specified.

In order to satisfy various applications and needs of various customers for lithium secondary batteries, it is necessary to investigate and combine not only the composition of materials but also various conditions of cell components, and much consideration is also required for factors such as time, effort, and costs required for development. For example, there are battery design specifications required by customers, and in some cases, the upper limit voltage thereof may vary depending on purposes and usages.

The present disclosure provides an efficient technology capable of finely adjusting charge/discharge capacity according to a change in an upper limit charge voltage taking into account various applications and needs, while maintaining cell components at the same level as possible as before.

A first aspect of the present disclosure relates to a positive electrode active material.

The present disclosure may relate to, for example, a high-nickel lithium transition metal composite oxide-based positive electrode active material having a layered structure, which is characterized in that a lattice volume V of the positive electrode active material satisfies the following Equation 1, and the Curie-Weiss temperature T satisfies the following Equation 2:

$$[\text{Equation 1}]$$

$$101.4 \ \text{Å}^3 \leq V \leq 101.75 \ \text{Å}^3$$

$$[\text{Equation 2}]$$

$$0 \ \text{K} \leq T \leq 30 \ \text{K}$$

The lattice volume V may be a value measured by X-ray powder diffraction (XRD), and the Curie-Weiss temperature may be a value measured by a superconducting quantum interference device (SQUID). The XRD and the SQUID may be performed according to evaluation examples described below, respectively.

Herein, "layered structure" may refer to a structure of the positive electrode active material, including a lithium layer and a transition metal layer. Herein, "high-nickel" may refer to that Ni is included in the lithium transition metal composite oxide in an amount of, for example, 70 mol% or more, with respect to the total transition metal, and in other examples, in an amount of 75 mol% or more, or 80 mol% or more with respect to the total transition metal.

The present disclosure may provide a positive electrode active material in which the lattice volume V and the Curie-Weiss temperature T are within the above ranges by controlling components described below.

As the battery performance is considered as a key specification of the final product, consumers have more strict, specific, and sophisticated requirements and standards. Accordingly, in order to meet the specifications required by customers, appropriate modification of battery design conditions for utilization and optimization of materials including, for example, active materials, is necessary. However, the development of batteries without a clear direction and design blueprint may involve numerous trial and error repetitions, resulting in inefficiency. Therefore, identifying and controlling the most efficient process variables from a material stage to a final battery stage, and designing the battery accordingly, are important for optimizing battery performance and improving stability within the cost constraints.

In order to address the limitation described above, the present disclosure provides a positive electrode active material in which the lattice volume V and the Curie-Weiss temperature T are controlled to a predetermined range. The positive electrode active material in which the lattice volume V and the Curie-Weiss temperature T are controlled as described above has an appropriate level of nickel occupancy characteristics of the lithium layer as described below. Thus, the lattice volume V and the Curie-Weiss temperature T of the positive electrode active material may be controlled such that the phase transition during a charge/discharge process of the battery, for example, an H2-H3 phase transition has a desired level of charge/discharge capacity. According to the present disclosure, by controlling the lattice volume V and the Curie-Weiss temperature T of the positive electrode active material, which may be measured relatively readily in a method according to the evaluation examples described below, to a predetermined range, electrochemical characteristics including charge/discharge capacity of a finally manufactured battery may be controlled as required from a material level.

The positive electrode active material of the present disclosure may be characterized in that, for example, the lattice volume V satisfies the following Equation 3:

$$[\text{Equation 3}]$$

$$101.5 \ \text{Å}^3 \le V \le 101.70 \ \text{Å}^3$$

The positive electrode active material of the present disclosure may be characterized in that, for example, the Curie-Weiss temperature T satisfies the following Equation 4:

$$[\text{Equation 4}]$$

$$10 \ \text{K} \le T \le 25 \ \text{K}$$

The positive electrode active material of the present disclosure may be characterized by including, for example, the lithium layer and the transition metal layer, and at least a portion of a lithium site of the lithium layer is occupied by nickel.

The positive electrode active material of the present disclosure may be characterized in that, for example, a nickel occupancy ($Ni_{Li}$) of the lithium layer is 0.003 to 0.015. Herein, "nickel occupancy ($Ni_{Li}$) of the lithium layer" may refer to a mole fraction of nickel in the lithium layer. The nickel occupancy may be measured according to the evaluation example described below. Herein, "lithium" or "nickel" means including ions. In another example, the positive electrode active material of the present disclosure may be characterized in that, the nickel occupancy ($Ni_{Li}$) of the lithium layer is 0.004 to 0.014 or 0.04 to 0.013, for example, 0.005 to 0.012. By allowing the positive electrode active material to include nickel occupying the lithium layer as described above in a predetermined range, it is possible to provide a positive electrode active material satisfying the conditions of the lattice volume V and the Curie-Weiss temperature T of the positive electrode active material at the same time. This allows the control of H2-H3 phase transition behavior and the securing of battery capacity according to the design purpose to be easily confirmed and controlled at the material level.

In the high-nickel lithium transition metal composite oxide-based positive electrode active material having a layered structure, since an ionic radius of $Ni^{2+}$ (0.69 Å) is similar to the ionic radius of $Li^+$ (0.76 Å) in an octahedral environment, a small amount of $Ni^{2+}$ reduced from $Ni^{3+}$ may easily occupy the lithium site and replace lithium in the lithium layer. Accordingly, at least a portion of the lithium layer is occupied by nickel, and the nickel occupancy ($Ni_{Li}$) of the lithium layer may affect the phase transition occurring during the charge/discharge process, for example, the H2-H3 phase transition behavior. Since the nickel contained in the lithium layer has a pillar effect that controls the collapse of the lithium layer during a phase transition process, it is necessary to ensure that the nickel in the lithium layer is appropriately occupied. For example, as the nickel occupancy ($Ni_{Li}$) of the lithium layer increases, an H2-H3 transition peak appears at an increased voltage and a voltage plateau ($V_{H2-H3}$) may increase. As the nickel occupancy ($Ni_{Li}$) of the lithium layer decreases, the H2-H3 transition peak appears at a decreased voltage, and the voltage plateau ($V_{H2-H3}$) may decrease. Based on this tendency, the voltage value at which H2-H3 structural phase transition occurs may be adjusted according to the required upper limit voltage of a lithium secondary battery, thereby optimizing the charge/discharge capacity of the battery. The H2-H3 phase transition refers to the phase transition from a second hexagonal phase to a third hexagonal phase, and may cause crack formation and gas generation. Therefore, the nickel occupancy ($Ni_{Li}$) of the lithium layer and the resultant H2-H3 phase transition should be appropriately controlled to implement electrochemical characteristics including the charge/discharge capacity of the battery, as intended.

The nickel occupancy ($Ni_{Li}$) of the lithium layer may be controlled, for example, by adjusting synthesis conditions of the positive electrode active material (for example, including but not limited to, a Li/M molar ratio, a sintering temperature, and sintering time). In one example, the Li/M molar ratio may be controlled within a range of 0.96 to 1.04. As the Li/M molar ratio increases, the nickel occupancy ($Ni_{Li}$) of the lithium layer may decrease. Alternatively, as the Li/M molar ratio decreases, the nickel occupancy ($Ni_{Li}$) of the lithium layer may increase.

In one example, sintering may be performed twice during the manufacture of the positive electrode active material. The sintering temperature during a primary sintering may be within a range of 300°C to 500°C, and the sintering time may be within a range of 3 hours to 5 hours. In addition, the sintering temperature during a secondary sintering may be within a range of 600°C to 900°C, and the sintering time may be within a range of 5 hours to 7 hours. At least one of the primary sintering and/or the secondary sintering may be performed, for example, under an oxygen atmosphere.

In the positive electrode active material of the present disclosure, for example, the transition metal layer may or may not include lithium. In one example, the positive electrode active material of the present disclosure may have a structure in which only the lithium site of the lithium layer is replaced with or added with nickel, and in another example, may further have a structure in which a portion of the transition metal of the transition metal layer is replaced with or added with lithium.

The positive electrode active material of the present disclosure may be characterized by having a crystalline size of 100 nm to 300 nm, for example. By allowing the positive electrode active material of the present disclosure to have a crystalline size in the above range, it is possible to prevent or suppress the excessive widening of a contact surface between the positive electrode active material and an electrolyte, and the volume expansion of the positive electrode active material or the battery due to charging and discharging, and it is also possible to suppress a phenomenon in which a lithium charge and discharge path increases due to the enlargement of the crystalline size, thereby reducing the overall capacity of the battery.

The positive electrode active material of the present disclosure may be characterized by being represented by, for example, the following Formula 1:

[Formula 1]     $Li_aNi_{1-b-c-d}Co_bMn_cQ_dO_{2+\delta}$

In the above formula, Q may be at least one element selected from zirconium (Zr), titanium (Ti), tungsten (W), aluminum (Al) and boron (B), and $0.96 \leq a \leq 1.04$, $0 \leq b \leq 0.3$, $0 \leq c \leq 0.3$, $0 \leq d \leq 0.1$, $0 \leq b+c+d \leq 0.3$, and $-0.1 \leq \delta \leq 0.1$.

The positive electrode active material of the present disclosure may be characterized in that, for example, that the value of "b+c+d" in Formula 1 is $0 \leq b+c+d \leq 0.2$.

The positive electrode active material of the present disclosure may be doped with, for example, a doping element, and the doping element may be at least one selected from zirconium (Zr), titanium (Ti), tungsten (W), aluminum (Al), and boron (B). The doping metal may be included in the lithium transition metal composite oxide in a mole fraction of 10.0% or less, 9.0% or less, 8.0% or less, 7.0% or less, 6.0% or less, 5.0% or less, 4.0% or less, 3.0% or less, 2.5% or less, 2.0% or less, 1.5% or less, 1.0% or less, 0.9% or less, 0.8% or less, 0.7% or less, 0.6% or less, or 0.5% or less, or 0.01% or more, 0.1% or more, 0.3% or more, 0.5% or more, 1.0% or more, 2.0% or more, or 2.5% or more, but the present disclosure is not limited thereto. Some changes may occur in the synthesis conditions of the positive electrode active material depending on the above doping. However, the doping metal is within the aforementioned range, the crystalline size or nickel occupancy ($Ni_{Li}$) of the lithium layer may be controlled within an appropriate range, and as a result, it is possible to secure an accurate battery capacity according to a design purpose.

The shape of the positive electrode active material may be, for example, a particle shape such as a true sphere or an elliptical sphere. The particle diameter of the positive electrode active material is not particularly limited, and may be within a range applicable to the positive electrode active material of a conventional lithium secondary battery.

The second aspect of the present disclosure relates to a lithium secondary battery.

The matters relating to the first aspect of the present disclosure may be equally applied to the matters relating to the second aspect unless specifically described otherwise.

The lithium secondary battery of the present disclosure may be characterized by including, for example, a positive electrode including the positive electrode active material according to the first aspect, a negative electrode, and an electrolyte. The lithium secondary battery of the present disclosure may selectively further include, for example, a separator.

The positive electrode may include a positive electrode current collector and a positive electrode active material layer, and the positive electrode active material layer may include the positive electrode active material according to the first aspect, a conductive agent, a binder, and/or an additive.

The conductive agent is used to provide conductivity to the electrode, and any conductive agent may be used in a battery to be formed, without particular limitation, as long as it has electronic conductivity without causing chemical changes in the battery. Examples of the conductive agent include graphite such as natural graphite or artificial graphite; carbon-based materials such as carbon black, acetylene black, Ketjen black, channel black, furnace black, lamp black, thermal black, and carbon fibers; metal powder or metal fibers such as copper, nickel, aluminum, and silver; conductive whiskers such as zinc oxide whiskers and potassium titanate whiskers; conductive metal oxides such as titanium oxide; or conductive polymers such as polyphenylene derivatives. Among these, one type may be used alone, or a mixture of two or more types may be used. The conductive agent may be typically included in an amount of 1 wt% to 30 wt% based on a total weight of the positive electrode active material layer.

The binder serves to improve the adhesion between the positive electrode active material particles, and the adhesion between the positive electrode active material and the positive electrode current collector. Examples of the binder may include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene butadiene rubber (SBR), fluororubber, or various copolymers thereof. Among these, one type may be used alone, or a mixture of two or more types may be used. The binder may be included in an amount of 1 wt% to 30 wt% based on the total weight of the positive electrode active material layer.

The additive may be a sintering additive or an irreversible additive. The sintering additive may include at least one of, for example, zirconium, yttrium or strontium. The irreversible additive may be an excessive-lithium oxide, for example, $Li_2NiO_2$ or $Li_6CoO_4$, but is not limited thereto.

The positive electrode may be manufactured according to a typical method of manufacturing a positive electrode except that the above-described positive electrode active material is used. For example, a composition for forming a positive electrode active material layer, which includes the above-described positive electrode active material as well as selectively, the binder, the conductive agent, and/or the additive, is coated on the positive electrode current collector, and the positive electrode may then be manufactured by drying and rolling the coated positive electrode current collector. In this case, the composition for forming a positive electrode active material layer may further include a solvent, and types and amounts of the positive electrode active material, the binder, the conductive agent, and the additive are the same as those previously described.

The solvent may be a solvent generally used in the art. Examples of the solvent may include dimethyl sulfoxide (DMSO), isopropyl alcohol, N-methylpyrrolidone (NMP), acetone, or water. Among these, one type may be used alone, or a mixture of two or more types may be used. The amount of the solvent used is sufficient, as long as the solvent may dissolve or disperse the positive electrode active material, the conductive agent, and the binder in consideration of a coating thickness of a slurry and a manufacturing yield, and may allow to have a viscosity that may provide excellent thickness uniformity during the subsequent coating for the manufacture of the positive electrode.

The positive electrode may be manufactured by casting the composition for forming a positive electrode active material layer on a separate support and then laminating a film separated from the support on the positive electrode current collector.

The positive electrode current collector is not particularly limited as long as it has conductivity without causing chemical changes in the battery, and may be made of, for example, copper (Cu), nickel (Ni), aluminum (Al), vanadium (V), gold (Au), platinum (Pt), chromium (Cr), iron (Fe), zinc (Zn), indium (In), germanium (Ge), lithium (Li), magnesium (Mg), stainless steel, titanium (Ti), cobalt (Co), or an alloy thereof. Also, the positive electrode current collector may have a thickness of 3 $\mu$m to 500 $\mu$m, and microscopic irregularities may be formed on the surface of the current collector to improve the adhesion of the positive electrode active material. The positive electrode current collector may be used in various forms such as a film, a sheet, a foil, a net, a porous material, a foam, and a non-woven fabric. The positive electrode current collector may be omitted depending on some cases.

In addition to the aforementioned configuration, the positive electrode may further include known configurations that may be included in a positive electrode in a lithium secondary battery.

In the lithium secondary battery, the negative electrode may include, in one example, a negative electrode current collector and a negative electrode active material layer positioned on the negative electrode current collector. In another example, the negative electrode may be a negative electrode for an anode-less battery, which includes no negative electrode active material layer immediately after the manufacture of the battery and forms a negative electrode active material layer such as a lithium metal layer through battery charging.

The negative electrode current collector is not particularly limited as long as it has high conductivity without causing chemical changes in the battery. As for the negative electrode current collector, for example, copper, stainless steel, aluminum, nickel, titanium, baked carbon, copper or stainless steel that is surface-treated with carbon, nickel, titanium, or silver, and an aluminum-cadmium alloy may be used. Also, the negative electrode current collector may typically have a thickness of 3 $\mu$m to 500 $\mu$m, and similar to the positive electrode current collector, microscopic irregularities may be formed on the surface of the current collector to improve the adhesion of a negative electrode active material. The negative electrode current collector may be used in various forms such as a film, a sheet, a foil, a net, a porous material, a foam, and a non-woven fabric.

The negative electrode active material layer selectively includes the binder, the conductive agent, and the additive in addition to the negative electrode active material. The negative electrode active material layer may be manufactured by coating a composition for forming a negative electrode, which includes the negative electrode active material and the like, on the negative electrode current collector and drying the coated negative electrode current collector, or may be manufactured by casting the composition for forming a negative electrode on a separate support and then laminating a film separated from the support on the negative electrode current collector. The composition for forming a negative electrode may further include a solvent, and the solvent may be selected from examples of solvents included in the composition for forming a positive electrode, described above.

As for the negative electrode active material, a compound capable of reversible intercalation and deintercalation of lithium ions may be used. Examples of the negative electrode active material may include carbonaceous materials such as artificial graphite, natural graphite, graphitized carbon fibers, and amorphous carbon; metallic compounds such as Si, Al, Sn, Pb, Zn, Bi, In, Mg, Ga, Cd, or Si alloys, Sn alloys, or Al alloys, which are capable of being alloyed with lithium; metal oxides such as $SiO_\beta(0<\beta<2)$, $SnO_2$, vanadium oxide, or lithium vanadium oxide, which are capable of doping and de-doping lithium; or composites including the metallic compound and the carbonaceous material, such as a Si-C composite and a Sn-C composite. Among these, one type may be used alone, or a mixture of two or more types may be used. Also, a metallic lithium thin film may be used as the negative electrode active material. Furthermore, both low crystalline carbon and high crystalline carbon may be used as the carbon material. Representative examples of the low crystalline carbon may be soft carbon and hard carbon, and representative examples of the high crystalline carbon may include amorphous, plate-like, flaky, spherical or fiber-like natural or artificial graphite, Kish graphite, pyrolytic carbon, mesophase pitch-based carbon fibers, meso-carbon microbeads, mesophase pitches, and high-temperature baked carbon such as petroleum and coal tar pitch derived cokes. Also, the binder and the conductive agent may be the same as those previously described in the positive electrode.

Meanwhile, in the lithium secondary battery, the separator separates the negative electrode and the positive electrode, and provides a movement path for lithium ions. Those commonly used as a separator in lithium secondary batteries may be used without any particular limitation, and for example, those having an excellent electrolyte moisture retention ability while having low resistance for ion migration of an electrolyte, may be used. According to an embodiment, porous polymer films, for example, porous polymer films prepared with a polyolefin-based polymer such as an ethylene homopolymer, a propylene homopolymer, an ethylene/butene copolymer, an ethylene/hexene copolymer and an ethylene/methacrylate copolymer may be used either alone or a laminated structure of two or more layers thereof, may be used. In addition, common porous non-woven fabrics, for example, non-woven fabrics made of high melting point glass fiber or polyethylene terephthalate fiber may be used. In addition, a coated separator including a ceramic component or a polymer material to secure heat resistance or mechanical strength, may be used, and may be selectively used in a single-layer structure or multilayer structure. The separator may be omitted in some cases.

The electrolyte used in the present disclosure may include an organic liquid electrolyte, an inorganic liquid electrolyte, a solid polymer electrolyte, a gel-type polymer electrolyte, a solid inorganic electrolyte, a molten inorganic electrolyte that may be used in the manufacture of a lithium secondary battery, but is not limited thereto.

For example, the electrolyte may include an organic solvent and a lithium salt.

The organic solvent may be used without any particular limitation as long as the organic solvent may act as a medium through which ions involved in electrochemical reactions of the battery may move. For example, as for the organic solvent, an ester-based solvent such as methyl acetate, ethyl acetate, $\gamma$-butyrolactone, or $\varepsilon$-caprolactone; an ether-based solvent such as dibutyl ether, or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methylethyl carbonate (MEC), ethylmethyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bond aromatic ring or an ether bond); an amide-based solvent such as dimethylformamide; a dioxolane-based solvent such as 1,3-dioxolane; or a sulfolane-based solvent may be used. Among these, a carbonate-based solvent may be used, and a mixture of a cyclic carbonate having high ion conductivity and high permittivity to increase the charge/discharge performance of a battery (for example, ethylene carbonate, or propylene carbonate) and a low-viscosity linear carbonate-based compound (for example, ethyl methyl carbonate, dimethyl carbonate, or diethyl carbonate) may be used. In this case, by using a mixture of a cyclic carbonate and a chain-type carbonate in a volume ratio of about 1:1 to about 1:9, the electrolyte may exhibit excellent performance.

The lithium salt may be used without any particular limitation as long as it is a compound capable of providing lithium ions used in a lithium secondary battery. For example, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$. The concentration of the lithium salt may be used within a range of 0.1 M to 2.0 M. When the concentration of the lithium salt is within the above range, the electrolyte may have appropriate conductivity and viscosity, and thus, exhibit excellent electrolyte performance, and lithium ions may move effectively.

In order to improve the lifetime characteristics of the battery, suppress a reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte, in addition to the electrolyte components. In this case, the additive may be included in an amount of 0.1 wt% to 5 wt% based on a total weight of the electrolyte.

The lithium secondary battery may further include selectively, for example, a battery case for accommodating an electrode assembly of the positive electrode, the negative electrode, and the separator, and an encapsulation member for encapsulating the battery case.

A third aspect of the present disclosure relates to a method for manufacturing a positive electrode active material.

The matters relating to the first aspect and/or the second aspect of the present disclosure may be equally applied to matters relating to the third aspect unless specifically described otherwise.

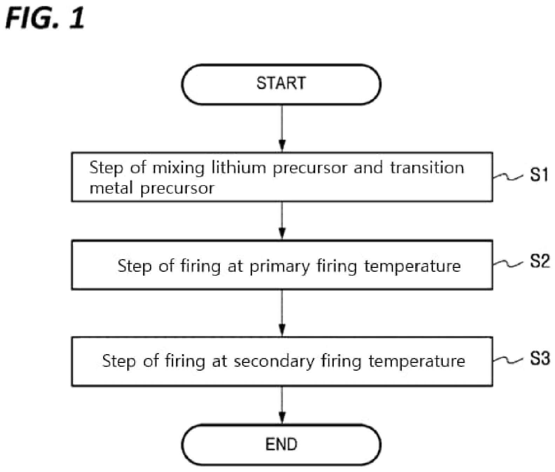

Referring to FIG. 1, the present disclosure relates to, for example, a method for manufacturing a high-nickel lithium transition metal composite oxide-based positive electrode active material having a layered structure, the method including: mixing a lithium precursor and a transition metal precursor such that a molar ratio of lithium to a transition metal (Li/M molar ratio) is 0.96 to 1.04 (S1); performing primary sintering on a mixture of the precursors at a temperature of 300°C to 500°C (S2); and performing secondary sintering on the mixture of the precursors on which the primary sintering has been performed, at a temperature of 600°C to 900°C (S3), where a lattice volume V of the positive electrode active material satisfies the following Equation 1, and the Curie-Weiss temperature T satisfies the following Equation 2:

$$[\text{Equation } 1]$$

$$101.4 \text{ Å}^3 \leq V \leq 101.75 \text{ Å}^3$$

$$[\text{Equation } 2]$$

$$0 \text{ K} \leq T \leq 30 \text{ K}$$

The lattice volume V is a value measured by X-ray powder diffraction (XRD), and the Curie-Weiss temperature is a value measured by a superconducting quantum interference device (SQUID).

The primary sintering may be performed at a temperature of 350°C to 450°C or a temperature of 380°C to 420°C in other examples. The primary sintering may be performed for 1 hour to 7 hours, for example, and may be performed for 3 hours to 5 hours in other examples.

The secondary sintering may be performed at a temperature of 650°C to 850°C or a temperature of 690°C to 730°C in other examples. The secondary sintering may be performed for, for example, 2 hours to 10 hours, and in other examples, may be performed for 3 hours to 9 hours, 4 hours to 8 hours, or 5 hours to 7 hours.

The present disclosure may relate to a method for manufacturing a lithium secondary battery, the method including: for example, adjusting a molar ratio of lithium to the transition metal (Li/M molar ratio) included in the positive electrode active material to adjust a voltage at which the H2-H3 structural phase transition occurs, and adjusting the voltage at which the H2-H3 structural phase transition occurs to adjust an upper limit charge capacity during charging.

The adjusting of the molar ratio of lithium to the transition metal (Li/M molar ratio) included in the positive electrode active material may include, for example, mixing a lithium precursor and a transition metal precursor such that the molar ratio of lithium to the transition metal (Li/M molar ratio) has a specific value; performing sintering on a mixture of the precursors at a primary sintering temperature; and performing sintering on the mixture of the precursors on which the primary sintering has been performed, at a secondary sintering temperature higher than the primary sintering temperature. The specific value may be, for example, 0.96 to 1.04, but is not limited thereto. The secondary sintering temperature may be, for example, higher than the primary sintering temperature by a range of 100°C to 1000°C. The secondary sintering temperature may be higher than the primary sintering temperature by a range of 200°C to 800°C, 300°C to 400°C, or 300 to 350°C in other examples.

Hereinafter, the present disclosure will be described in detail by way of examples in order to further explain the contents of the present disclosure as described above and intended operations and effects of the present disclosure. However, the examples may be modified in various different forms, and the scope of the present disclosure is not to be construed as being limited to these examples. It is emphasized that the examples are provided to explain the present disclosure to those skilled in the art.

**Design of Experiment**

A positive electrode active material (Example 1) having a specific precursor Li/M molar ratio was manufactured, and then, the nickel occupancy in a lithium layer thereof was measured. Thereafter, positive electrode active materials (Examples 2 to 5) having various nickel occupancies in lithium layers thereof while maintaining a crystalline size as similar as possible to that of Example 1 were manufactured. The tendency between the lattice volume of the layered structure and the Curie-Weiss temperature of the positive electrode active materials with respect to the nickel occupancies in the lithium layers of Examples 1 to 5 was confirmed.

**Examples**

Examples 1 to 5 are synthesis examples of positive electrode active materials that were subjected to primary sintering and secondary sintering while changing input Li/M. For example, as indicated in the table below, Li/M molar ratios of Examples 1, 2, 3, 4, and 5 increased by a certain amount to 1, 1.01, 1.02, 1.03, and 1.04, respectively.

**Example 1**

A lithium source $LiOH \cdot H_2O$ was added and mixed in a positive electrode active material precursor $Ni_{0.87}Co_{0.08}Mn_{0.05}(OH)_2$ such that the Li/M molar ratio was 1. The mixed powder was put into an alumina crucible. Thereafter, the mixed powder was primarily sintered at 400°C under an oxygen atmosphere for 4 hours. Then, the powder subjected to grinding, washing, and drying processes was mixed with 0.1 wt% of $H_3BO_3$ and then, secondarily sintered at 710°C under an air atmosphere for 6 hours to obtain a lithium transition metal composite oxide-based positive electrode active material.

**Examples 2 to 5**

Except for changes in synthesis conditions as indicated in Table 1 below, the positive electrode active materials were manufactured in the same manner as in Example 1. As a result, parameters such as a crystalline size and the like, and capacity characteristics were indicated as in Table 1 below.

At the same sintering temperature, when the Li/M molar ratio decreases, the crystalline size tends to decrease, and when the Li/M molar ratio increases, the crystalline size tends to increase. In order to control the crystalline size as similar as possible, the secondary sintering temperature was finely adjusted ($-2\Delta T$, $-1\Delta T$, 0, $\Delta T$, $2\Delta T$) as in the examples. Since the change in crystalline size according to the Li/M molar ratio varies depending on the standard sintering temperature, the value of $\Delta T$ may vary depending on the sintering temperature. In this case, the nickel occupancy of the lithium layer is decreased, which led to a tendency for a decrease in the microstrain, and a positive electrode active material showing a tendency for a decrease in the layered structure lattice volume and a decrease in the Curie-Weiss temperature could be obtained.

[Table 1]

| Classification | Synthesis Condition | | | | | Parameter | | | | Charge Capacity | |
|---|---|---|---|---|---|---|---|---|---|---|---|
| | Li/M molar ratio in layered structure | Primary sintering temperature (°C) | Primary sintering time (h) | Secondary sintering temperature (°C) | Secondary sintering time (h) | Crystalline Size (nm) | Nickel occupancy in lithium layer $(Ni_{Li})$ | Lattice volume $(\text{Å}^3)$ | Curi-Weiss (K) | 4.1V | 4.2V |
| Example 1 | 1 | 400 | 4 | 710 | 6 | 133 | 0.0113 | 101.666 | 25 | Spec-Out | Spec-In |
| Example 2 | 1.01 | 400 | 4 | 705 | 6 | 127 | 0.0096 | 101.642 | 18 | Spec-In | Spec-In |
| Example 3 | 1.02 | 400 | 4 | 700 | 6 | 131 | 0.008 | 101.607 | 15 | Spec-In | Spec-In |
| Example 4 | 1.03 | 400 | 4 | 695 | 6 | 127 | 0.0067 | 101.578 | 10 | Spec-In | Spec-In |
| Example 5 | 1.04 | 400 | 4 | 690 | 6 | 124 | 0.0052 | 101.531 | 12 | Spec-In | Spec-Out |

Table 1 illustrates five types of the Examples according to the synthesis conditions when producing $LiMO_2$ (M = Ni, Co, Mn, Al) layered structure positive electrode active materials, parameters (*e.g.*, XRD and SQUID measurement results) representing characteristics of the positive electrode active materials, and the Spec-In (suitable) and Spec-Out (unsuitable) according to the measurement of charge capacity of a cylindrical cell (battery). The case where the upper limit voltage of the charge capacity is 4.1 V (lower than the voltage at which the H2-H3 structural phase transition occurs (*e.g.,* 4.15 V to 4.175 V)) is distinguished from the case where the upper limit voltage is 4.2 V (higher than the voltage at which the H2-H3 structural phase transition occurs). This is because that the influence of the input Li/M ratio differs before and after the voltage of the H2-H3 structural phase transition (H2-H3 structural phase transition voltage).

First, when synthesizing high-nickel NCM(A), since an atomic radius of $Ni^{2+}$ is similar to that of $Li^+$, not only ideal $Ni^{3+}$ exits in a transition metal position of the layered structure, and some of $Ni^{2+}$ naturally occupies the lithium layer. When the input Li/M molar ratio is increased by changing the input ratio of the Li source precursor and the M transition metal source precursor, which are input during synthesis, is changed to increase the input Li/M molar ratio, a relative oxidation atmosphere based on the transition metal is formed during the synthesis, which may lower the occupancy of $Ni^{2+}$ in the lithium layer. As a result, by controlling the occupancy of $Ni^{2+}$, the volage for the H2-H3 structural phase transition of $LiMO_2$ in the vicinity of the upper limit charge voltage may be controlled. When plotting a charge/discharge curve (capacity vs voltage), since capacity increases rapidly at the H2-H3 structural phase transition voltage, the capacity may be controlled according to its purpose by slightly controlling the H2-H3 structural phase transition voltage.

## Evaluation Example 1. Lattice Volume V

The XRD measurement was performed using Bruker Corporation's D8 Endeavor equipment (Cu target 40 kV, 40 mA; Lynxeye-XE-T 1D detector). The measurement conditions were set as fixed divergence slit 0.5°, $2\theta = 10°$ to 125°, $\Delta 2\theta = 0.016°$, and time per step of 0.4s. Depending on the microstrain or crystallinity of powder samples, a slit gap adjustment, a $2\theta$ measurement range, a $\Delta 2\theta$ interval, and the time per step may be adjusted to be suitable for the sample. The sampling of the same powder samples was performed three times to obtain an average and deviation values. Then, the TOPAS program was used for the XRD measurement data to obtain lattice constants a and c, and a lattice volume V.

The Rietveld structural analysis was performed using the fundamental parameter approach to consider measurement equipment information, and the lattice constants a and c, the lattice volume V, the crystalline size, and the microstrain of the R-3m crystal group were calculated.

## Evaluation Example 2. Nickel Occupancy in the Lithium Layer

When an ideal simple crystal structure model is assumed, lithium is located in the Wyckoff position 3a (0 0 0), M such as a transition metal and Al is located in the position 3b (0 0 0.5), and oxygen is located in the position 6c (0 0 z) in an $LiMO_2$ unit cell. When an actual high-nickel positive electrode active material is synthesized, $Ni^{2+}$ has a similar radius to that of $Li^+$, so that some $Ni^{3+}$ may be reduced to $Ni^{2+}$, and $Ni^{2+}$ may occupy the $Li^+$ site. At this time, substituted lithium may exist in other forms outside the $LiMO_2$ unit cell or may occupy the transition metal layer. Thus, a crystal structure model $(Li_{1-x}Ni^{2+}_x)^{3a}(Ni^{3+}_{1-y}Li_y)^{3b}O_2$, in which lithium and some nickel mainly occupy the Wyckoff position 3a, and nickel and some lithium mainly occupy the position 3b was used as an initial model to perform the Rietveld structural analysis. In this case, the occupancy x of some nickel in the position 3a and the occupancy y of some lithium in the position 3b need not be the same in the crystal structure model. In the evaluation example, the occupancy y of lithium in the position 3b was fitted as 0 (zero), and the crystal structure model was simplified, so that a model $(Li_{1-x}Ni^{2+}_x)^{3a}(M)^{3b}O_2$ (M = Ni, Co, Mn, Al and the like) was used. By the XRD measurement and analysis method, changes in the lattice constants and lattice volume may be precisely measured with a deviation of lattice constant a = 0.0002 Å, lattice constant c = 0.001 Å, and lattice volume V = 0.01 Å, and this small change in lattice constant means that the nisel occupancy within the lithium layer is well controlled.

## Evaluation Example 3. Crystalline Size

The crystalline size may be evaluated using the LVol-IB value or LVol-FWHM value obtained by the Rietveld analysis method of the TOPAS program. In the evaluation example, the Rietveld crystalline size was evaluated using the LVol-IB value when k=1 of the TOPAS program was established. However, when a sample has a relatively large amount of microstrain or the microstrain increases due to the pressurization of an electrode rolling process, the microstrain as well as the crystalline size affects the full width at half maximum (FWHM) of a diffraction peak, so that the crystalline size may not be properly obtained. An increase in the FWHM of the diffraction peak due to the microstrain is greater in accordance with an increase in the measurement angle of the XRD. Thus, in the case, the Scherrer's equation for the (003) diffraction peak may be applied to obtain the crystalline size in (003) direction.

A single peak fitting for the (003) diffraction peak is performed using the fundamental parameter approach that considers equipment resolution in the TOPAS program. The crystalline size in the (003) direction may be obtained by the

following formula:

$$\text{Crystalline Size}_{(003)} = k\lambda / \{\text{FWHM}_{(003),\text{sample}}\cos(\theta)\},$$

k = 0.89, $\lambda$ : x-ray wavelength

At this time, with respect to the FWHM of the (003) diffraction peak measured, the deconvolution of the FWHM by the equipment resolution may be performed to obtain $\text{FWHM}_{(003),\text{sample}}$ according to the crystalline size of the sample.

[Table 2]

| Classification | Crystalline Size (nm) | (003) Crystalline Size (nm) |
|---|---|---|
| Example 1 | 133 | 145 |
| Example 2 | 127 | 149 |
| Example 3 | 131 | 148 |
| Example 4 | 127 | 153 |
| Example 5 | 124 | 151 |

Referring to Table 2, the crystalline size may be obtained using only the Rietveld structural analysis and the (003) diffraction peak. The method of obtaining the crystalline size using a (hkl) diffraction peak measured from the entire XRD pattern by the Rietveld structural analysis is a method of measuring an average crystalline size in a (hkl) crystal plane direction. However, in the case of rolled electrode samples unlike the powder samples, it is sometimes difficult to obtain the crystalline size due to high-angle peak broadening caused by microstrains. Therefore, Table 2 indicates the crystalline size obtained using only the (003) diffraction peak at a low angle.

**Evaluation Example 4. Curie-Weiss Temperature**

The magnetic susceptibility was measured within the range of 5 K to 300 K using the Quantum Design company's MPMS equipment. The magnetic field and a measurement temperature step may be changed depending on sample measurement conditions. In the evaluation example, the measurement temperature step was measured at an interval of 5 K while applying the magnetic field of 1 Tesla. In Examples 1 to 5, a rapid increase in the magnetic susceptibility due to ferromagnetic impurities was not observed.

Meanwhile, when other magnetic impurities are present, the magnetic susceptibility may be described by the general equation including the impurity as below (see Stephen Blundell, Magnetism in Condensed Matter).

$$\chi_m^{\text{cgs}} [\text{emu/mol/Oe}] = M/H = \chi_{\text{sample}} + (\chi_T + \chi_0)_{\text{impurity}} = C/(T-\theta_{CW}) + C_T/T + \chi_0$$

The magnetic susceptibility of the sample of interest and the magnetic susceptibility of the impurity may be mixed, and the magnetic susceptibility of the impurity may be divided into temperature-dependent magnetic susceptibility $C_T/T$ that follows the Curie-Weiss law and $\chi_0$ that has little temperature dependence.

In the plotting of the inverse magnetic susceptibility of the above magnetic susceptibility according to temperature, a line with a constant slope and y-intercept in a temperature range equal to or greater than a magnetic phase transition temperature may be plotted. By removing the influence of the magnetic susceptibility due to the impurity and calculating the slope a and y-intercept b of the inverse magnetic susceptibility with respect to the magnetic susceptibility of the sample, it is possible to obtain effective magnetic moment Curie-Weiss temperature.

$$1/\chi = (T-\theta_{CW})/C = 1/C*T - \theta_{CW}/C = aT+b$$

Effective Magnetic Moment $\mu_{\text{eff}} = 2.827\text{sqrt}(\chi_m^{\text{cgs}}T) \approx 2.827\text{sqrt}(C) = 2.827\text{sqrt}(1/a)$
Curie-Weiss temperature

$$\theta_{CW} = -b*C$$

The Curie-Weiss temperature indicates an average strength of the magnetic interaction of a magnetic material. In a high-nickel active material having a layered structure, when the nickel occupancy of the lithium layer is large, the Curie-Weiss temperature has a positive value (dominant ferromagnetic interaction). At this time, as the nickel occupancy decreases, the Curie-Weiss temperature of the positive value tends to decrease. The change in the Curie-Weiss temperature according to the nickel occupancy of the lithium layer is more sensitive than the change in the effective magnetic moment, and is less dependent on the crystal structure model, unlike the case of the Rietveld structural analysis. Therefore, by observing the changes in the lattice constant and the Curie-Weiss temperature of XRD, it is possible to synthesize samples with a controlled nickel occupancy in the lithium layer in a complementary manner.

**Evaluation Example 5. Charge Capacity**

(Manufacture of Coin Half Cells)

All of the coin half cells were manufactured in the same manner except for a positive electrode active material, and were measured in the same manner and under the same conditions.

First, a synthesized NCM-based active material, a conductive agent (Super C), and a binder (PVDF) were mixed in an N-methylpyrrolidone (NMP) solvent to prepare a slurry. The slurry is coated on one surface of an aluminum current collector, and then dried at 130°C followed by roll-pressing to manufacture an electrode. At this time, the thickness of a positive electrode layer excluding the current collector was less than 100 $\mu$m. Next, a lithium metal electrode was used as a counter electrode (negative electrode) and a porous polyethylene (PE) separator is disposed between the positive electrode and the negative electrode. Finally, an electrolyte is added thereto to complete the coin half cell.

(Evaluation of Charge Capacity)

The manufactured coin cell was charged (0.2 C) to 4.25 or 4.175 V using a constant current-constant voltage (CC-CV) method at 25 °C, and a final charge capacity is measured by maintaining the terminal voltage until an end current became 0.05 C.

**Evaluation Example 6. Spec-In/Out Determination**

In a specific positive electrode active material to be used as a standard, a voltage at which a voltage plateau of H2-H3 structural phase transition appeared could be confirmed through measurement. Since the Spec-In and Spec-Out ranges of the charge capacity vary depending on whether a target upper limit charge voltage during battery design is above or below the voltage plateau, it is possible to determine whether to increase or decrease the input Li/M molar ratio within a specific range.

As a method for determining the Spec-In and Spec-Out, the percentage of a relatively implemented capacity compared to a theoretical capacity when the Li/M molar ratio is 1 may be used as a reference value. At this time, since 4.175 V and 4.25 V of the coin cells have a similar level of electrochemical potential to 4.1 V and 4.2 V of cylindrical cells, the suitability for the cylindrical cell may be determined based on this matter of the coin cells.

For example, the coin cell was assembled with each positive electrode active material and a lithium metal, and then, a charge capacity value at a cut-off voltage of 4.175 V was measured four times. When the charge capacity value exceeded 70.5% of the theoretical capacity all four times, it may be determined as a Spec-In of 4.1 V of the cylindrical cell. When a charge capacity value at a cut-off voltage of 4.25 V was measured four times and exceeded 78.5% of the theoretical capacity all four times, it may be determined as a Spec-In positive electrode active material of 4.2 V of the cylindrical cell. When a standard capacity value is not achieved even once out of the four times, it may be determined as the Spec-Out.

Referring to Table 1, when the upper limit charge voltage was 4.1 V, which was lower than the H2-H3 structural phase transition voltage (*e.g.,* 4.15 V to 4.175 V), as the input Li/M ratio was increased, the nickel occupancy of the lithium layer was decreased, and the H2-H3 structural phase transition voltage was relatively decreased, thereby increasing the charge capacity. In this case, Example 1 with a relatively small input Li/M ratio became the Spec-Out based on the charge capacity, and Examples 2 to 5 with an increased input Li/M ratio became the Spec-In.

When the upper limit charge voltage was 4.2 V, which was higher than the H2-H3 structural phase transition voltage (*e.g.,* 4.15 V to 4.175 V), the charge capacity could not be increased by lowering the structural phase transition voltage because the upper limit charge voltage was already higher than the H2-H3 structural phase transition voltage. Rather, the charge capacity may be decreased by reducing the number of transition metals contributing to redox reactions, and accordingly, Example 5 with a large input Li/M ratio became the Spec-Out.

FIG. 2 is a graph illustrating the lattice volume V according to nickel occupancy ($Ni^{2+}$ at Li site, $Ni_{Li}$) of the lithium layer of the positive electrode active material according to an embodiment of the present disclosure.

Referring to FIG. 2, when $Ni^{2+}$ in the lithium layer decreases and the movement of the entire $Li^+$ changes in a direction of entering the lithium layer (arrow direction of FIG. 2), it may be confirmed that the lattice volume V decreases, and a unit cell volume decreases as the number of oxidations from $Ni^{3-x}$ to $Ni^{3+}$ of the transition metal relatively increases.

FIG. 3 is a graph illustrating the Curie-Weiss temperature T according to the nickel occupancy of the lithium layer ($Ni^{2+}$ at Li site, $Ni_{Li}$) of the positive electrode active material, according to an embodiment of the present disclosure.

Referring to FIG. 3, the Curie-Weiss temperature tends to decrease as $Ni^{2+}$ of the lithium layer decreases. The Curie-Weiss temperature indicates the average strength of magnetic interaction, and the strength of the magnetic interaction between magnetic atoms tends to change very sensitively depending on the $Ni^{2+}$ occupancy of the lithium layer. Therefore, a positive electrode active material where the $Ni^{2+}$ occupancy of the lithium layer is controlled by the Curie-Weiss temperature according to the nickel occupancy of the lithium layer ($Ni^{2+}$ at Li site, $Ni_{Li}$) may be characterized.

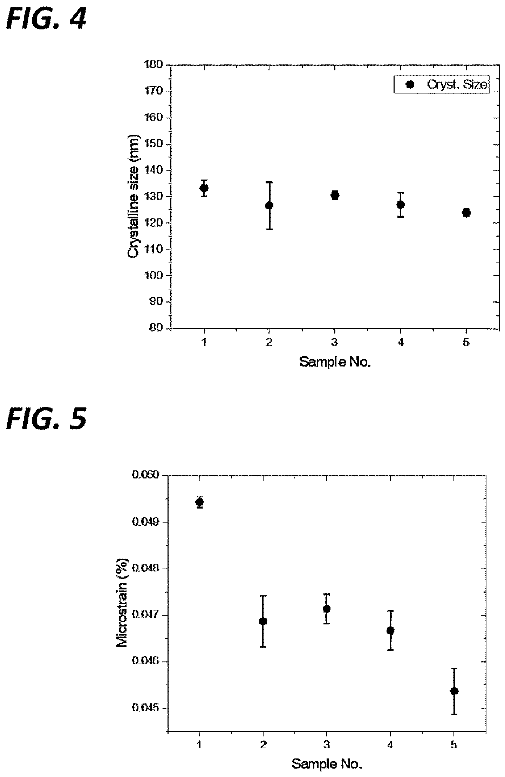

FIG. 4 is a graph illustrating the crystalline sizes of the positive electrode active materials for Examples 1 to 5 (Sample Nos. 1 to 5) of the present disclosure.

FIG. 4 illustrates that when the input Li/M ratio increases over Examples 1 to 5 (corresponding to Sample Nos. 1 to 5), the crystalline size tends to increase based on the same sintering temperature. Therefore, it may be confirmed that the influence of process variables may be minimized by appropriately lowering the sintering temperature or adjusting a holding time to maintain a constant crystalline size.

FIG. 5 is a graph illustrating the microstrains of the positive electrode active materials for Examples 1 to 5 (corresponding to Sample Nos. 1 to 5) of the present disclosure.

FIG. 5 illustrates that when the $Ni^{2+}$ occupancy of the lithium layer decreases, the microstrain tends to decrease. For example, in the case of an ideal perfect crystal, the microstrain has a value of 0 (zero). Therefore, based on this tendency, the microstrain may be controlled by controlling the $Ni^{2+}$ occupancy of the lithium layer.

As discussed above, according to the present disclosure, it is possible to produce battery cells that meet the customer demands while maintaining existing process parameters as similarly as possible, and shorten a development period and reduce costs.

For example, in the case of the high-nickel NCM(A) layered structure of the positive electrode active material, $Ni^{2+}$ spontaneously occupies the lithium (Li) layer during synthesis (the atomic radii of $Ni^{2+}$ and $Li^+$ are similar). As a result, the $Ni^{2+}$ occupancy of the Li layer affects the voltage at which the H2-H3 structural phase transition occurs at the end of charging. For example, when the $Ni^{2+}$ occupancy decreases, the H2-H3 structural phase transition voltage tends to decrease, while when the $Ni^{2+}$ occupancy increases, the H2-H3 structural phase transition voltage tends to increase.

Based on such results, when the upper limit charge voltage required by a customer is lower than the H2-H3 structural phase transition voltage (4.1 V of the cylindrical cell as an example in Table 1), the input Li/M ratio may be increased to reduce the $Ni^{2+}$ occupancy, and the H2-H3 structural phase transition voltage may be reduced to increase the charge capacity. In the above examples, Example 1 is in the case of the Spec Out, and Examples 2 to 5 are in the case of the Spec-In.

In addition, when the upper limit charge voltage required by the customer is higher than the H2-H3 structural phase transition voltage (4.2 V of the cylindrical cell as an example in Table 1), there is no advantage of increasing the charge capacity by lowering the H2-H3 structural phase transition voltage due to an increase in the input Li/M ratio. Rather, the charge capacity may be reduced by lowering the ratio of the transition metal that undergoes a redox reaction. In the above examples, Examples 1 to 4 are in the case of the Spec-In, and Example 5 is in the case of the Spec-Out.

In summary, when manufacturing the lithium secondary battery including the high-nickel lithium transition metal composite oxide-based positive electrode active material having a layered structure, the voltage at which the H2-H3 structural phase transition occurs may be adjusted by adjusting the molar ratio of lithium to the transition metal included in the positive electrode active material (Li/M molar ratio), and the charge capacity may be adjusted by adjusting the voltage at which the H2-H3 structural phase transition occurs. In addition, the adjusting of the molar ratio of lithium to the transition metal included in the positive electrode active material (Li/M molar ratio) may include mixing a lithium precursor and a transition metal precursor such that the molar ratio of lithium to the transition metal (Li/M molar ratio) has a specific value; performing sintering on a mixture of the precursors at a primary sintering temperature; and performing sintering on the mixture of the precursors on which the primary sintering has been performed, at a secondary sintering temperature higher than the primary sintering temperature.

While the above has been described with reference to the embodiments of the present disclosure, it will be understood by those skilled in the art or having ordinary knowledge of the art that various modifications and changes may be made to the present disclosure without departing from the technical scope of various embodiments of the present disclosure described in the claims to be described later, which will be described below. Accordingly, the technical scope of various examples of the present disclosure is not limited to contents described in the detailed description of the disclosure, but should be defined by the patent claims.

**Claims**

1. A positive electrode active material with a high-nickel lithium transition metal composite oxide-based positive electrode active material having a layered structure,

   wherein a lattice volume V of the positive electrode active material satisfies following Equation 1, and Curie-Weiss temperature T satisfies following Equation 2:

   $$[\text{Equation 1}]$$

   $$101.4 \text{ Å}^3 \leq V \leq 101.75 \text{ Å}^3$$

   $$[\text{Equation 2}]$$

   $$0 \text{ K} \leq T \leq 30 \text{ K}$$

   where the lattice volume V of the positive electrode active material is a value measured by X-ray powder diffraction (XRD), and the Curie-Weiss temperature is a value measured by a superconducting quantum interference device (SQUID).

2. The positive electrode active material according to claim 1, wherein the lattice volume V of the positive electrode active material satisfies following Equation 3:

   $$[\text{Equation 3}]$$

   $$101.5 \text{ Å}^3 \leq V \leq 101.70 \text{ Å}^3$$

3. The positive electrode active material according to claim 1, wherein the Curie-Weiss temperature T of the positive electrode active material satisfies following Equation 4:

   $$[\text{Equation 4}]$$

   $$10 \text{ K} \leq T \leq 25 \text{ K}$$

4. The positive electrode active material according to claim 1, wherein the positive electrode active material includes a lithium layer and a transition metal layer, and
   at least a portion of a lithium site of the lithium layer is occupied by nickel.

5. The positive electrode active material according to claim 4, wherein a nickel occupancy ($Ni_{Li}$) of the lithium layer is 0.003 to 0.015.

6. The positive electrode active material according to claim 4, wherein a nickel occupancy ($Ni_{Li}$) of the lithium layer is 0.005 to 0.012.

7. The positive electrode active material according to claim 1, wherein a crystalline size of the positive electrode active material is 100 nm to 300 nm.

8. The positive electrode active material according to claim 1, wherein the positive electrode active material is represented by following Formula 1:

   [Formula 1]       $Li_aNi_{1-b-c-d}Co_bMn_cQ_dO_{2+\delta}$

   where Q is at least one element selected from zirconium (Zr), titanium (Ti), tungsten (W), aluminum (Al), and boron (B), and $0.96 \leq a \leq 1.04$, $0 \leq b \leq 0.3$, $0 \leq c \leq 0.3$, $0 \leq d \leq 0.1$, $0 \leq b+c+d \leq 0.3$, and $-0.1 \leq \delta \leq 0.1$.

9. The positive electrode active material according to claim 8, wherein b+c+d is $0 \leq b+c+d \leq 0.2$ in the Formula 1.

10. A lithium secondary battery comprising:
a positive electrode including the positive electrode active material according to claim 1, a negative electrode, and an electrolyte.

11. A method for manufacturing a high-nickel lithium transition metal composite oxide-based positive electrode active material having a layered structure, the method comprising:

mixing a lithium precursor and a transition metal precursor such that a molar ratio of lithium to a transition metal (Li/M molar ratio) is 0.96 to 1.04;
performing primary sintering on a mixture of the precursors at a temperature of 300°C to 500°C; and
performing secondary sintering on the mixture of the precursors on which the primary sintering has been performed, at a temperature of 600°C to 900°C,
wherein a lattice volume V of the positive electrode active material satisfies following Equation 1, and Curie-Weiss temperature T satisfies following Equation 2:

$$[\text{Equation 1}]$$

$$101.4 \ \text{Å}^3 \leq V \leq 101.75 \ \text{Å}^3$$

$$[\text{Equation 2}]$$

$$0 \ \text{K} \leq T \leq 30 \ \text{K}$$

where the lattice volume V is a value measured by X-ray powder diffraction (XRD), and the Curie-Weiss temperature is a value measured by a superconducting quantum interference device (SQUID).

12. A method for manufacturing a lithium secondary battery including a high-nickel lithium transition metal composite oxide-based positive electrode active material having a layered structure, the method comprising:

adjusting a molar ratio of lithium to a transition metal (Li/M molar ratio) included in the positive electrode active material to adjust a voltage at which an H2-H3 structural phase transition occurs, and
adjusting the voltage at which the H2-H3 structural phase transition occurs to adjust an upper limit charge capacity during charging.

13. The method according to claim 12, wherein the adjusting of the molar ratio of lithium to the transition metal (Li/M molar ratio) included in the positive electrode active material includes:

mixing a lithium precursor and a transition metal precursor such that the molar ratio of lithium to the transition metal (Li/M molar ratio) has a specific value;
performing sintering on a mixture of the precursors at a primary sintering temperature; and
performing sintering on the mixture of the precursors on which the primary sintering has been performed, at a secondary sintering temperature higher than the primary sintering temperature.

14. The method according to claim 13, wherein a lattice volume V of the positive electrode active material has a value of 101.4 Å$^3$ to 101.75 Å$^3$,

a Curie-Weiss temperature T of the positive electrode active material has a value of 0 K to 30 K, and
the lattice volume V is a value measured by X-ray powder diffraction (XRD), and the Curie-Weiss temperature T is a value measured by a superconducting quantum interference device (SQUID).

15. The method according to claim 12, wherein the positive electrode active material includes a lithium layer and a transition metal layer, and at least a portion of a lithium site of the lithium layer is occupied by nickel.

16. The method according to claim 15, wherein a nickel occupancy ($Ni_{Li}$) of the lithium layer is 0.003 to 0.015.

17. The method according to claim 12, wherein a crystalline size of the positive electrode active material is 100 nm to 300 nm.

18. The method according to claim 12, wherein the positive electrode active material is represented by following Formula 1:

[Formula 1] $Li_aNi_{1-b-c-d}Co_bMn_cQ_dO_{2+\delta}$

where Q is at least one element selected from zirconium (Zr), titanium (Ti), tungsten (W), aluminum (Al), and boron (B), and $0.96 \leq a \leq 1.04$, $0 \leq b \leq 0.3$, $0 \leq c \leq 0.3$, $0 \leq d \leq 0.1$, $0 \leq b+c+d \leq 0.3$, and $-0.1 \leq \delta \leq 0.1$.

FIG. 1

```
            ┌─────────────────┐
            │     START       │
            └────────┬────────┘
                     │
                     ▼
   ┌──────────────────────────────────────────┐
   │ Step of mixing lithium precursor and      │  ～ S1
   │ transition metal precursor                │
   └────────────────────┬─────────────────────┘
                        │
                        ▼
   ┌──────────────────────────────────────────┐
   │ Step of firing at primary firing          │  ～ S2
   │ temperature                               │
   └────────────────────┬─────────────────────┘
                        │
                        ▼
   ┌──────────────────────────────────────────┐
   │ Step of firing at secondary firing        │  ～ S3
   │ temperature                               │
   └────────────────────┬─────────────────────┘
                        │
                        ▼
            ┌─────────────────┐
            │      END        │
            └─────────────────┘
```

*FIG. 2*

*FIG. 3*

FIG. 4

FIG. 5

## INTERNATIONAL SEARCH REPORT

| International application No. |
|---|
| **PCT/KR2025/099038** |

### A.    CLASSIFICATION OF SUBJECT MATTER

**H01M 4/525**(2010.01)i; **H01M 4/505**(2010.01)i; **H01M 10/052**(2010.01)i; **C01G 53/50**(2025.01)i; **H01M 4/131**(2010.01)i; **H01M 4/1391**(2010.01)i; **C01G 53/42**(2025.01)i; **H01M 4/02**(2006.01)i

According to International Patent Classification (IPC) or to both national classification and IPC

### B.    FIELDS SEARCHED

Minimum documentation searched (classification system followed by classification symbols)

H01M 4/525(2010.01); H01M 10/05(2010.01); H01M 10/052(2010.01); H01M 4/02(2006.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지 (lithium secondary battery), 양극 활물질 (cathode active material), 층상 구조 (layered structure), 격자 부피 (lattice volume), 큐리-바이스 온도 (Curie-Weiss temperature), 하이-니켈 리튬 전이금속 복합 산화물 (high-nickel lithium transition metal oxide), H2/H3 구조 상전이 (H2/H3 phase transition), 니켈 점유도 (nickel occupancy)

### C.    DOCUMENTS CONSIDERED TO BE RELEVANT

| Category* | Citation of document, with indication, where appropriate, of the relevant passages | Relevant to claim No. |
|---|---|---|
| DX | KURZHALS, P. et al. The LiNiO2 cathode active material: A comprehensive study of calcination conditions and their correlation with physicochemical properties. Part I. Structural chemistry. Journal of The Electrochemical Society. 2021, vol. 168, thesis no.: 110518, pp. 1-12.  See abstract; Experimental section and Results and Discussion section; Tables I and II; and figure 6. | 1-18 |
| A | KR 10-2015-0030232 A (SUMITOMO METAL MINING CO., LTD.) 19 March 2015 (2015-03-19)  See abstract; claims 1-10; and paragraphs [0028]-[0038]. | 1-18 |
| A | KR 10-2021-0035300 A (HITACHI METALS, LTD.) 31 March 2021 (2021-03-31)  See abstract; claims 1-10; and paragraphs [0022], [0026] and [0057]. | 1-18 |
| A | KR 10-2017-0100534 A (QUANTUMSCAPE CORPORATION) 04 September 2017 (2017-09-04)  See abstract; and claims 1-37. | 1-18 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 April 2025** | **18 April 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2025/099038** |

### C. DOCUMENTS CONSIDERED TO BE RELEVANT

| Category* | Citation of document, with indication, where appropriate, of the relevant passages | Relevant to claim No. |
| --- | --- | --- |
| A | JP 3833331 B2 (SHARP CORP.) 11 October 2006 (2006-10-11)<br>See claims 1-4. | 1-18 |

Form PCT/ISA/210 (second sheet) (July 2022)

**INTERNATIONAL SEARCH REPORT**
Information on patent family members

International application No.

**PCT/KR2025/099038**

| Patent document cited in search report | | | Publication date (day/month/year) | Patent family member(s) | | | Publication date (day/month/year) |
|---|---|---|---|---|---|---|---|
| KR | 10-2015-0030232 | A | 19 March 2015 | JP | 6217636 | B2 | 25 October 2017 |
| | | | | US | 10084188 | B2 | 25 September 2018 |
| | | | | US | 2015-0188136 | A1 | 02 July 2015 |
| | | | | WO | 2014-010448 | A1 | 16 January 2014 |
| KR | 10-2021-0035300 | A | 31 March 2021 | CN | 112654585 | A | 13 April 2021 |
| | | | | CN | 112654585 | B | 21 March 2023 |
| | | | | EP | 3950599 | A1 | 09 February 2022 |
| | | | | EP | 3950599 | A4 | 11 May 2022 |
| | | | | JP | 6986211 | B2 | 22 December 2021 |
| | | | | KR | 10-2628617 | B1 | 24 January 2024 |
| | | | | US | 2022-0115656 | A1 | 14 April 2022 |
| | | | | WO | 2020-195790 | A1 | 01 October 2020 |
| KR | 10-2017-0100534 | A | 04 September 2017 | CN | 107210419 | A | 26 September 2017 |
| | | | | CN | 107210419 | B | 08 June 2021 |
| | | | | CN | 113394392 | A | 14 September 2021 |
| | | | | EP | 3238290 | A1 | 01 November 2017 |
| | | | | EP | 3238290 | A4 | 27 June 2018 |
| | | | | EP | 3238290 | B1 | 01 May 2024 |
| | | | | JP | 2018-505521 | A | 22 February 2018 |
| | | | | KR | 10-2591083 | B1 | 18 October 2023 |
| | | | | US | 10199649 | B2 | 05 February 2019 |
| | | | | US | 2016-0211517 | A1 | 21 July 2016 |
| | | | | WO | 2016-106321 | A1 | 30 June 2016 |
| JP | 3833331 | B2 | 11 October 2006 | DE | 69705446 | T2 | 08 November 2001 |
| | | | | EP | 0794586 | A1 | 10 September 1997 |
| | | | | EP | 0794586 | B1 | 04 July 2001 |
| | | | | JP | 09-298061 | A | 18 November 1997 |
| | | | | JP | 09-298062 | A | 18 November 1997 |
| | | | | US | 5792574 | A | 11 August 1998 |

Form PCT/ISA/210 (patent family annex) (July 2022)

## REFERENCES CITED IN THE DESCRIPTION

**Patent documents cited in the description**

- KR 20240036442
- KR 20240094617
- KR 20240179806

**Non-patent literature cited in the description**

- *J. Electrochem. Soc.*, 2021, vol. 168, 110518